# EUROPÄISCHE PATENTSCHRIFT

(11) **EP 3 770 709 B1**
(45) Veröffentlichungstag und Bekanntmachung des Hinweises auf die Patenterteilung: **30.03.2022**
(21) Anmeldenummer: 19188167.1
(22) Anmeldetag: 24.07.2019
(51) Int. Cl.: G05B 23/02, G05B 19/418, G06Q 10/06, G06Q 10/00, G06Q 50/04

(54) **VERFAHREN ZUM BETRIEB EINER AUTOMATISIERTEN TECHNISCHEN ANLAGE**
METHOD FOR OPERATING AN AUTOMATED TECHNICAL INSTALLATION
PROCÉDÉ DE FONCTIONNEMENT D'UNE INSTALLATION TECHNIQUE AUTOMATISÉE

(43) Veröffentlichungstag der Anmeldung: 27.01.2021
(73) Patentinhaber: Siemens Energy Global GmbH & Co. KG, 81739 München (DE)
(72) Erfinder: Gerstmaier, Alexej, 76287 Rheinstetten (DE); Konnov, Alexei, 76187 Karlsruhe (DE)

(56) Entgegenhaltungen:
- EP-A1- 2 122 428
- CN-A- 104 680 020
- CN-A- 106 682 320
- US-A1- 2009 096 407

## Beschreibung

Die Erfindung betrifft ein Verfahren zum Betrieb einer automatisierten technischen Anlage, welche eine Vielzahl von Hardwarekomponenten umfasst, die gemäß einer Projektierung zu einem Funktionsplan verschaltet sind, um einen Prozess in der technischen Anlage zu steuern. Ferner betrifft die Erfindung ein dazugehöriges Computerprogramm, ein Speichermedium und ein Computersystem.

Im Rahmen der technischen Risikoanalytik existieren vielfache Ansätze zur Modellierung technischer Systeme hinsichtlich ihrer Zuverlässigkeit und Verfügbarkeit. Ein Modellierungsansatz ist das Erstellen von Zuverlässigkeitsblockdiagrammen (ZBD, oder engl. reliability block diagrams, RBD). Theoretische Ansätze zur Ermittlung der Dauerverfügbarkeit eines Systems mittels Zuverlässigkeitsblockdiagrammen sind auch unter dem Begriff "Monte-Carlo Simulation" bekannt. Praktisch sind solche Methoden insbesondere für komplexe technische Systeme wie beispielsweise Leitsysteme industrieller Anlagen aufgrund des signifikantem Rechenaufwands kaum anwendbar, denn für jede Komponente im System müssen hunderte von Ereignissen wie Ausfall oder Reparatur probalistisch simuliert werden. Aus diesem Grund sind die "Monte Carlo Simulationen" für die Ermittlung einer momentanen Verfügbarkeit von Leitsystemen, die während des laufenden Betriebs einer Anlage berechnet werden, nicht geeignet.

In der Praxis werden aktuell proprietäre Algorithmen für die Berechnung der momentanen Verfügbarkeit von Leitsystemen verwendet. So ist aus der EP 2 122 428 B1 ein Verfahren und System zur Ermittlung von Zuverlässigkeitsparametern einer technischen Anlage bekannt.

Beispielsweise behandelt die US 2009/096407 (A1) ein Verfahren und System zur Fernvorhersage der Zuverlässigkeit und der verbleibenden Zeit bis zum Ausfall eines Gleichstrommotorsystems.

In der Regel ist es notwendig, solche Zuverlässigkeitsanalysen bereits in einer ersten Engineering Phase durchzuführen. Aufgrund der Komplexität der leittechnischen Systeme ist es allerdings sehr aufwändig, spätere Designänderungen, die beispielsweise während einer fortgeschrittenen Engineering Phase vorgenommen werden, in dem Zuverlässigkeitsblockdiagramm zu reflektieren.

Zum aktuellen Zeitpunkt ist nur eine manuelle Erzeugung des Zuverlässigkeitsblockdiagramms bekannt. Das manuelle Verfahren ist - je nach Komplexität des leittechnischen Systems bzw. der industriellen Anlage - mit einem enormen personellen Aufwand verbunden, da u.a. logische Beziehungen zwischen einzelnen Hardware-Komponenten eines Leitsystems, basierend auf den Verdrahtungsplänen und Projektierungsunterlagen, manuell mit Listen, in denen die zuvor berechneten Zuverlässigkeitsparameter der einzelnen Komponenten abgelegt sind, abgeglichen werden müssen. Eine kontinuierliche Analyse der Verfügbarkeit einer technischen Anlage oder von Teilen davon ist auf dieser Basis nicht möglich. Eine dynamische Berechnung der Verfügbarkeit ist jedoch wünschenswert, um den Operator bereits beim Hochfahren einer Anlage, aber auch im laufenden Betrieb kontinuierlich zu unterstützen, um Ausfälle und Schäden rechtzeitig zu erkennen.

Der Erfindung liegt demnach die Aufgabe zugrunde, den Betrieb einer technischen Anlage dahingehend zu verbessern, dass im laufenden Betrieb die Verfügbarkeit einer Anlage oder von Teilen davon dynamisch und weitestgehend automatisiert ermittelt wird.

Diese Aufgabe wird durch die Merkmale des unabhängigen Patentanspruchs 1 gelöst. Außerdem wird die Aufgabe gelöst durch ein Computerprogramm mit durch einen Computer ausführbaren Programmcodeanweisungen zur Implementierung des erfindungsgemäßen Verfahrens nach Anspruch 11, durch ein Speichermedium mit einem durch einen Computer ausführbaren Computerprogramm nach Anspruch 12 und ein Computersystem nach Anspruch 13.

Ausgestaltungen der Erfindung, die einzeln oder in Kombination miteinander einsetzbar sind, sind Gegenstand der Unteransprüche.

Das erfindungsgemäße Verfahren zum Betrieb einer automatisierten technischen Anlage, welche eine Vielzahl von Hardwarekomponenten umfasst, die gemäß einer Projektierung zu einem Funktionsplan verschaltet sind, um einen Prozess in der technischen Anlage zu steuern, ist derart ausgestaltet, dass in einem ersten Schritt aus dem Funktionsplan der technischen Anlage oder aus Teilen davon automatisiert ein Zuverlässigkeitsblockdiagramm für die technische Anlage oder für Teile davon erstellt wird. Ferner wird (aus dem Funktionsplan) für jede Komponente ein Status abgefragt und/oder ausgelesen. Basierend auf dem Zuverlässigkeitsblockdiagramm und dem Status jeder Komponente wird ein Graph erzeugt, mit welchem eine momentane Verfügbarkeit der technischen Anlage oder von Teilen davon berechnet wird. Diese wird auf einer Anzeigeeinheit ausgegeben, wobei die momentane Verfügbarkeit zur Bestimmung dessen, ob ein Eingriff in den Betrieb der technischen Anlage vorgenommen werden sollte nutzbar ist.

In vorteilhaften Ausführungsvarianten wird die momentane Verfügbarkeit entweder eventgesteuert oder zyklisch ermittelt. Eine eventgesteuerte Ermittlung hat den Vorteil einer effizienteren Nutzung der Rechenkapazität des Systems, in dem das erfindungsgemäße Verfahren implementiert ist (z.B. Leitsystem oder Cloud-Umgebung). Eine zyklische Ermittlung der momentanen Verfügbarkeit hingegen hat den Vorteil, dass fast nahezu in Echtzeit stets aktuelle Verfügbarkeitsdaten vorliegen, die ggfs. auch bei anderen Berechnungen verwendet werden können.

In einer besonders vorteilhaften Ausgestaltung der Erfindung wird das Zuverlässigkeitsblockdiagramm derart erstellt, dass ausgehend von einem Ausgangssignal einer Hardwarekomponente alle mit dem Ausgangssignal in Verbindung stehenden Eingangssignale, also alle relevanten Eingangssignale, basierend auf dem Funktionsplan ermittelt werden, dass alle mit dem Ausgangssignal in Verbindung stehenden weiteren Hardwarekomponenten basierend auf dem Funktionsplan ermittelt werden, und dass die Ausgangssignale, Eingangssignale, Hardwarekomponenten und Verbindungen in einer Abhängigkeitsstruktur, vorzugsweise einer Baumstruktur, hinterlegt werden, welche mittels eines geeigneten Transformationsalgorithmus in ein Zuverlässigkeitsblockdiagramm umgewandelt wird.

Damit wird ein Backward Propagation Ansatz verfolgt, der Abhängigkeiten zwischen den einzelnen Hardwarekomponenten bzw. der dazwischenliegenden Verbindungen auf einfache Art und Weise zeiteffizient identifizieren und abbilden kann. Der Begriff "Backward Propagation" meint dabei, dass die einzelnen Ketten von Hardwarekomponenten ausgehend vom Ausgangssignal bis zu einem Sensor als Ursprung zurückverfolgt werden.

Die Ermittlung kann dabei, ausgehend von dem Ausgangssignal, sequentiell erfolgen, d.h. ein bestimmter Pfad bzw. eine Verästelung zwischen einzelnen Hardwarekomponenten wird zunächst bis zu einem Sensor, verfolgt, um anschließend die weiteren Pfade/Verästelungen nacheinander abzuhandeln. Alternativ ist es möglich, die Ermittlung parallel vorzunehmen, was den Zeitaufwand weiter reduzieren kann, und nur mit einem vernachlässigbaren Mehraufwand an Rechenkapazität verbunden ist.

Die Abhängigkeitsstruktur wird mittels eines geeigneten Transformationsalgorithmus in das Zuverlässigkeitsblockdiagramm umgewandelt. Hierfür kann beispielsweise die Atlas Transformation Language (ATL) verwendet werden. Unter Einbeziehung des Zuverlässigkeitsblockdiagramms lässt sich anschließend auf einfache Art und Weise eine RAM-Analyse (Reliability, Availability & Maintainability) der industriellen Anlage durchführen.

In einem weiteren vorteilhaften Ausführungsbeispiel der Erfindung wird die momentane Verfügbarkeit mittels des Graphen berechnet, der das zuvor erstellte Zuverlässigkeitsblockdiagramm in maschinenlesbarer Form darstellt. Für den gegebenen Graphen werden ein Anfangsknoten und ein Endknoten ermittelt und alle Wege zwischen dem Anfangs- und Endknoten bestimmt. Da jede Kante einen Bezug auf die Ausfallrate der entsprechenden Komponente hat kann anhand der Kanten zwischen zwei Knoten eine Ausfallwahrscheinlichkeit bestimmt werden und für jeden Weg anhand der Ausfallraten die Verfügbarkeit in Abhängigkeit von der Zeit berechnet werden. Der große Vorteil dieser Anwendung des maschinenlesbaren Graphen besteht darin, dass auf diese Weise auch jegliche Redundanzen, auch verschachtelte Redundanzen, bestimmt und deren Grad klassifiziert werden kann.

In einer bevorzugten Weiterbildung der Erfindung wird die momentane Verfügbarkeit in Echtzeit berechnet wird und kontinuierlich als Trend angezeigt. Vorteilhaft kann so ein Operateur einer Anlage besonders frühzeitig den Ausfall einer Komponente erkennen und entsprechende Maßnahmen zur Reparatur oder Ersatz der Komponente einleiten. Eine Trendanzeige kann vorteilhaft in eine Applikation zur Anzeige verschiedener Key Performance Indikatoren einer technischen Anlage integriert werden.

Im Rahmen einer weiteren bevorzugten Weiterbildung des erfindungsgemäßen Verfahrens werden vor oder nach dem Umwandeln der Abhängigkeitsstruktur in das Zuverlässigkeitsblockdiagramm Zuverlässigkeitsparameter der Hardwarekomponenten aus einer Datenbank ausgelesen und in die Abhängigkeitsstruktur oder das Zuverlässigkeitsblockdiagramm oder den Graphen integriert.

Zusätzlich können gemäß einer weiteren Ausgestaltung der Erfindung aktuelle Prozesswerte, Meldungen oder Gesundheitswerte einzelner Komponenten aus einer Datenbank oder einem Leitsystem der technischen Anlage bei der Berechnung der momentanen Verfügbarkeit berücksichtigt werden. Dies erlaubt eine besonders vielschichtige Analyse des betrachteten Systems.

In einer sehr vorteilhaften Ausführungsvariante der Erfindung erfolgt die Erstellung des Zuverlässigkeitsblockdiagramms und/oder die Berechnung der momentanen Verfügbarkeit einer Komponente oder von Teilen der Anlage oder der Gesamtanlage in einem Computersystem oder einer Cloudumgebung.

Die für eine Zuverlässigkeit der Hardwarekomponenten und/oder der Verbindungen zwischen den Hardwarekomponenten relevanten Daten können zusätzlich oder alternativ aus einer Cloudumgebung ausgelesen werden, in der immer aktualisierte Daten für die einzelnen Hardwarekomponenten zur Verfügung stehen. Bei der Cloudumgebung kann es sich beispielsweise um Mindsphere^{®} der Siemens AG handeln. Ein weiteres Beispiel sind jegliche Digital Lifecycle Services, die cloudbasiert arbeiten.

Insbesondere in Kombination mit den zuvor erwähnten cloudbasierten Lösungen schafft das erläuterte Verfahren ein integrales Modell, dass eine Funktionsstruktur sowie anlagenbezogene Zuverlässigkeitsparametrierungen der Hardwarekomponenten und/oder Verbindungen zwischen den einzelnen Hardwarekomponenten exakt und effizient widerspiegelt und einen deutlich verbesserten Anlagenbetrieb bereitstellt.

Vorteilhafterweise wird das Verfahren nach Ablauf einer vorherbestimmten Zeitdauer und/oder bei Auftreten eines sonstigen bestimmten Triggers, insbesondere eines Austauschs einer Hardwarekomponente, automatisch wiederholt durchgeführt, um den Graphen zu aktualisieren. Aufgrund des im Vergleich zum Stand der Technik deutlich verringerten Zeitaufwands und der Automatisierung des Verfahrens kann die Erstellung des Zuverlässigkeitsblockdiagramms und des Graphen zur Berechnung der momentanen Verfügbarkeit wiederholt vorgenommen werden, um auf (externe) Änderungen in der industriellen Anlage (z.B. ein Austausch einer Hardwarekomponente) zeitnah reagieren zu können. Zudem lässt sich mittels planmäßiger Wiederholungen das Zuverlässigkeitsbild der industriellen Anlage aktuell halten.

Bevorzugt wird das zuvor erläuterte Verfahren auf ein in die industrielle Anlage integriertes, leittechnisches System angewandt. Dabei weist das leittechnische System in analoger Weise zu der industriellen Anlage eine Mehrzahl an Hardwarekomponenten auf, die mittels eines Kennzeichensystems gekennzeichnet sind.

Im Folgenden wird die Erfindung anhand der in den Figuren dargestellten Ausführungsbeispiele näher beschrieben und erläutert.

Es zeigen:
- FIG 1: ein Ausschnitt aus einer Projektierungsunterlage, die Funktionsbausteine einer Sensor-Aktuator Anordnung mit einer ODER-Verknüpfung zeigt
- FIG 2: ein Ausführungsbeispiel für ein Verfahren zur automatischen Erstellung eines Zuverlässigkeitsblockdiagramms der Sensor-Aktuator Anordnung aus Fig. 1 gemäß Anspruch 3
- Fig 3: eine Baumstruktur als Beispiel für eine Abhängigkeitsstruktur als Resultat des Verfahrens aus Fig. 2
- Fig. 4: ein Zuverlässigkeitsblockdiagramm der Sensor-Aktuator Anordnung aus Fig. 1
- Fig. 5: ein Graph gemäß der Erfindung für die Sensor-Aktuator Anordnung aus Fig. 1
- FIG 6: Auswirkungen des Ausfalls einer Komponente innerhalb der Sensor-Aktuator Anordnung auf den Graphen aus Fig. 5 und Darstellung der zugehörigen momentanen Verfügbarkeiten
- FIG 7: ein Zuverlässigkeitsblockdiagramm einer im Vergleich zu Fig. 1 komplizierteren (nicht gezeigten) Projektierung
- FIG 8: ein Graph gemäß der Erfindung, welcher aus dem Zuverlässigkeitsblockdiagramm aus Fig. 7 erstellt wurde

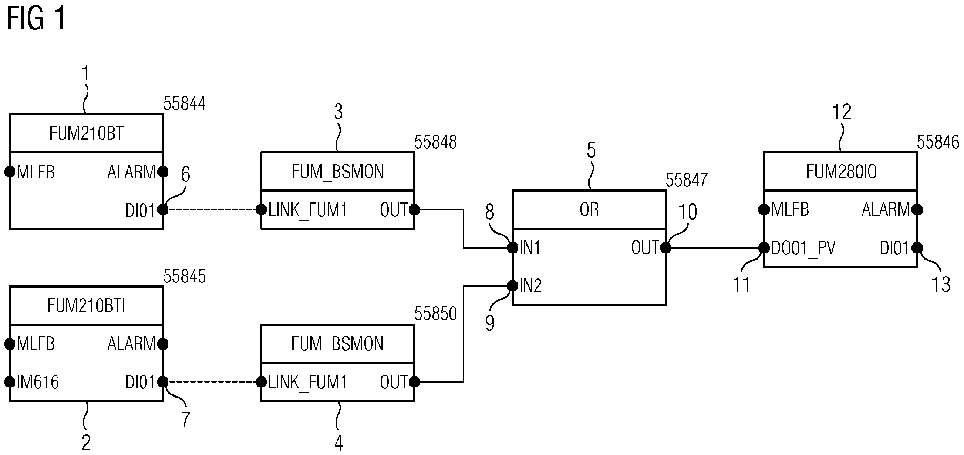

In Fig. 1 ist ein Ausschnitt aus einer Projektierungsunterlage einer technischen Anlage gezeigt.

Unter Projektierung werden hier die wesentlichen Schritte und Abläufe für die Planung und Durchführung von Automatisierungsprojekten im Bereich der Verfahrenstechnik verstanden, wobei sowohl kontinuierliche als auch ereignisdiskrete Prozesse betrachtet werden. Die Projektierung umfasst somit den allgemeinen Aufbau einer Automatisierungsanlage und den Steuerungs- bzw. Regelungsentwurf mit den entsprechenden Unterlagen und Schaltplänen. Sie wird auch häufig als Engineering bezeichnet.

In der Automatisierungstechnik werden die Logiken oder Schaltungen zur Realisierung einer Automatisierungsfunktion wie beispielsweise der Ansteuerung eines Aktuators mittels einer speicherprogrammierbaren Steuerung gemäß der internationalen Norm IEC 61131-3 mittels Funktionsbausteinsprache programmiert. Die somit erzeugten Funktionspläne bestehen aus grafischen Elementen, den Funktionsbausteinen, und Logikbausteinen, die alle über Linien miteinander verbunden sind. Der Signalfluss verläuft von links nach rechts. In Fig. 1 repräsentieren die Funktionsbausteine gemäß der IEC 61131-3 die Verschaltung einer Sensor-Aktuator Anordnung mit einer ODER-Verknüpfung. Auf der linken Seite sind zwei Sensorbausteine 1,2 dargestellt, die jeweils über einen Auswertebaustein 3,4 mit einem logischen ODER-Baustein 5 verbunden sind. Jeder der beiden Sensorbausteine 1,2 weist eine eigene Typ-Bezeichnung, eine so genannte MLFB-Nummer auf. Ferner weist jeder Funktionsbaustein einen Alarm-Ausgang und mindestens einen weiteren digitalen Signalausgang 6,7 auf. Den Signalausgängen sind ebenfalls Kennzeichnungen zugeordnet (z.B. gemäß dem Kraftwerk-Kennzeichensystem KKS) Der logische ODER-Baustein 5 weist 2 digitale Signaleingänge 8,9 auf, die jeweils mittels eines Auswertebausteins 3,4 mit den Signalausgängen 6,7 verbunden sind.

Der logische ODER-Baustein 5 weist zudem einen digitalen Signalausgang 10 auf, der mit dem digitalen Signaleingang 11 eines Aktuators 12 verbunden ist. Der Aktuator 12 weist zudem einen digitalen Signalausgang 13 auf.

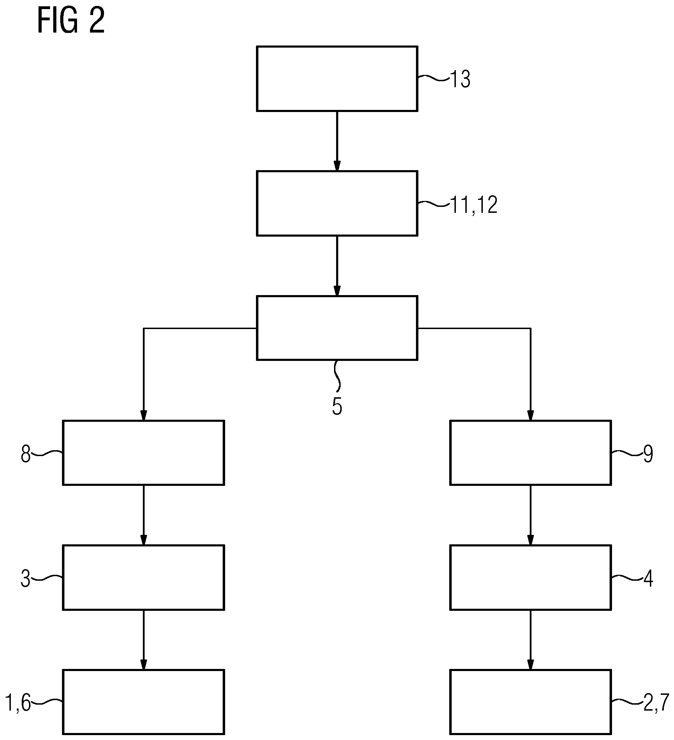

In Fig. 2 ist ein Flussdiagramm dargestellt, in welchem die Schritte angegeben sind, die zur automatischen Erstellung eines Zuverlässigkeitsblockdiagramms der in Fig. 1 gezeigten Struktur durchgeführt werden.

Zu jedem Ausgangssignal 13 (gekennzeichnet durch ein KKS) des Aktuators 12 wird nach allen mit dem Signalausgang 13 verbundenen Hardwarekomponenten oder Signaleingängen gesucht. Vorliegend folgt basierend auf dem Funktionsplan gemäß Fig. 1 auf den digitalen Signalausgang 13 des Aktuators 12 der digitale Signaleingang 11. Dieser wiederum ist mit dem logischen Oder-Baustein 5 verbunden. Weitere Hardwarekomponenten, welche mit dem Ausgangssignal in Verbindung stehen existieren nicht.

Nach dem Baustein 5 verzweigt sich die in FIG 2 dargestellte Struktur in zwei Pfade. Der linke Pfad führt von dem digitalen Signaleingang 8 über den Funktionsbaustein 3 bis zu dem Sensor 1 bzw. dessen digitalen Signalausgang 6. Der rechte Pfad führt von dem digitalen Signaleingang 9 über den Funktionsbaustein 4 bis zu dem Sensor 2 bzw. dessen digitalen Signalausgang 7.

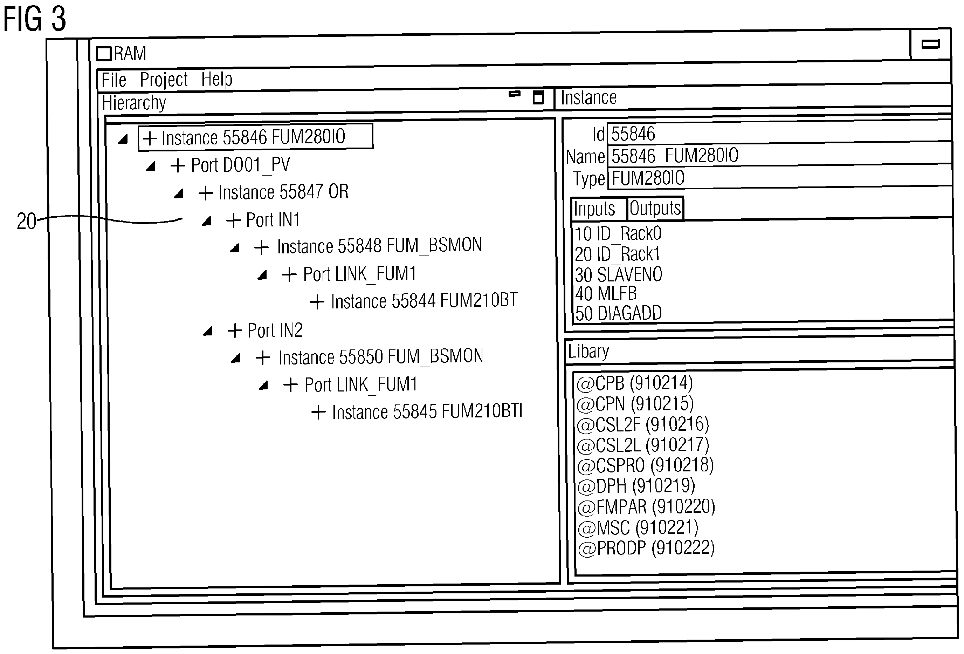

In einem nächsten Schritt werden die Ausgangssignale, Eingangssignale, Hardwarekomponenten und Verbindungen in einer Abhängigkeitsstruktur hinterlegt. Beispielhaft für eine Abhängigkeitsstruktur ist in Fig. 3 eine Baumstruktur 20 gezeigt. Zusammen mit den Signalausgängen bzw. Signaleingängen und den Hardwarekomponenten wird aus dem Funktionsplan aus FIG 1 das Kennzeichensystem der Hardwarekomponenten ausgelesen. Anhand der Typisierung der Hardwarekomponenten kann die Baumstruktur erstellt werden. Für den Baustein der Nummer 55846 der Funktionsbaugruppe des Typs FUM280IO (Hardwarekomponente 12) existiert das Eingangssignal DO01_PV, welches mit dem ODER-Baustein Nummer 55847 verbunden ist. Von diesem ODER-Baustein wiederum ist der Eingang IN1 mit dem Baustein Nummer 55848 des Typs FUM_BSMON verbunden, dessen Signaleingang LINK_FUM1 wiederum mit der Funktionsbaugruppe des Typs FUM210BT mit der Nummer 55844 verbunden ist. Von dem ODER-Baustein Nummer 55847 ist der Eingang IN2 mit dem Baustein Nummer 55850 des Typs FUM_BSMON verbunden, dessen Signaleingang LINK_FUM1 mit der Funktionsbaugruppe des Typs FUM210BTI mit der Nummer 55845 verbunden ist. Die Baumstruktur reflektiert demnach die projektierten Abhängigkeiten der Ausgangssignale von den Eingangssignalen und somit die Abhängigkeiten zwischen den Hardware-Komponenten.

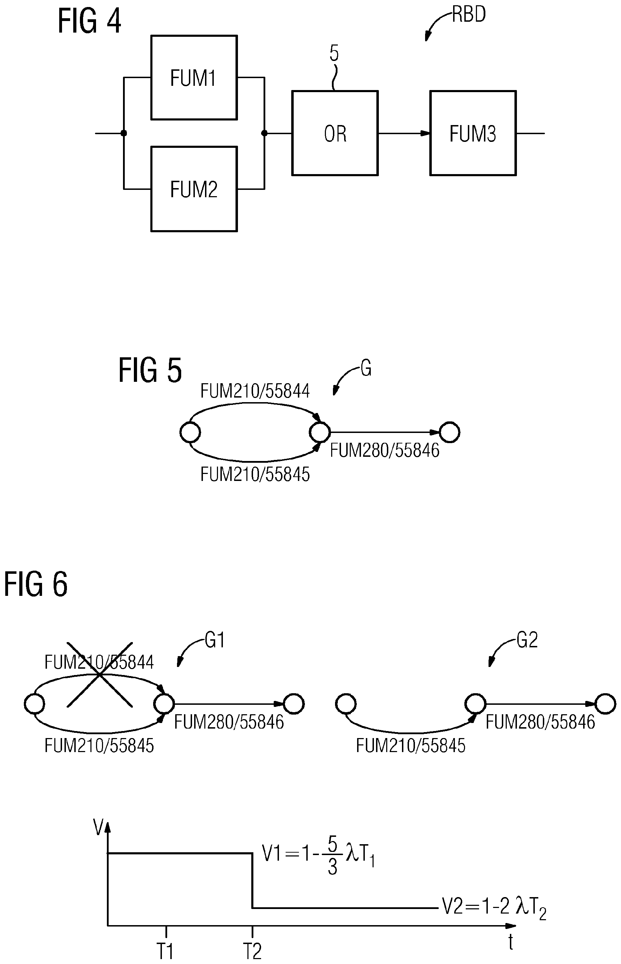

Die Baumstruktur wird anschließend mittels eines geeigneten Transformationsalgorithmus wie beispielsweise der Atlas Transformation Language (ATL) in ein Zuverlässigkeitsblockdiagramm RBD umgewandelt. Für das Beispiel aus Fig. 1 ist ein Zuverlässigkeitsblockdiagramm in Fig. 4 dargestellt. Die Kästen FUM1 bis FUM3 stellen die jeweiligen Hardware-Komponenten (hier des Typs Funktionsbaugruppe) dar. Der Baustein 5 entspricht der logischen ODER-Baugruppe.

In einem Zuverlässigkeitsblockdiagramm werden die für die Funktionserfüllung notwendigen Elemente (Subsysteme, Baugruppen oder Komponenten) seriell verknüpft. Die Elemente, die ausfallen dürfen, weil sie beispielsweise redundant vorhanden sind, werden parallel verknüpft. Ein Zuverlässigkeitsblockdiagramm kann daher große Unterschiede zu einem Schaltplan von Komponenten zeigen. Eine Parallelschaltung aus einer Spule und einem Kondensator beispielsweise wird im Sinne der Zuverlässigkeit im Zuverlässigkeitsblockdiagramm als Serienschaltung dargestellt.

Für jede Hardware-Komponente können nun die für die Zuverlässigkeitsanalyse relevanten Zuverlässigkeitsparameter (z.B. Fehlerrate, Reparaturrate, Ausfallrate, Diagnostic Coverage) der einzelnen Hardwarekomponenten beispielsweise aus einer Datenbank entnommen werden. Bei der Datenbank kann es sich um einen Server innerhalb oder außerhalb des Leitsystems handeln. Auch eine Verbindung zu einer Cloud-Struktur ist möglich. Das Zuverlässigkeitsblockdiagramm dieser Art wird zumeist nach dem Engineering einer Anlage erstellt und gibt im Wesentlichen die HW-Struktur der Anlage wider. Ein Operateur kann nun beispielsweise manuell diese automatisch erstellte Struktur zur Feststellung der Verfügbarkeit einzelner Hardwarekomponenten auswerten. Zuverlässigkeitsblockdiagramme dieser Art lassen sich jedoch nur für probabilistische Aussagen verwenden.

Gegenstand der vorliegenden Erfindung ist es jedoch unter anderem, diese Struktur in eine maschinenlesbare Form zu überführen, um vollkommen automatisiert und zeitabhängig die Verfügbarkeit von einer Vielzahl von Hardwarekomponenten zu ermitteln. Zum besseren Verständnis hierzu ist in Fig. 5 eine weitere Darstellungsweise für ein Zuverlässigkeitsblockdiagramm gezeigt. Der dargestellte Graph entspricht **nicht** der Markovschen Darstellungsweise von Zustandsdiagrammen, bei denen ein Knoten eine Wahrscheinlichkeit darstellt, dass sich das Gesamtsystem zum Zeitpunkt t in einem Zustand (Z1 = intakt, Z2 = ausgefallen) befindet. Eine Verbindung zwischen zwei Knoten wird in der Markovschen Darstellungsweise als Kante bezeichnet und kann als Übergangswahrscheinlichkeit zwischen zwei Zuständen interpretiert werden. Die innerhalb eines Intervalls [t,t+Δt] möglichen Zustandsübergänge sind in der Markovschen Darstellungsweise durch Pfeile mit den dazugehörigen Übergangsraten λ (= Ausfallrate) und µ (= Reparaturrate) multipliziert mit dem Zeitintervall Δt gekennzeichnet.

In der in Fig. 5 gezeigten Darstellung hingegen (hier als Graph G bezeichnet) stellt ein Knoten die Verbindung zwischen zwei oder mehreren physikalischen Komponenten dar. Die Kanten hingegen repräsentieren die physikalischen Komponenten an sich (hier FUM210/55844, FUM210/55845 und FUM280/55846) und enthalten Verweise auf die Zuverlässigkeitsparameter (z.B. Fehlerrate, Reparaturrate, Ausfallrate, Diagnostic Coverage). Bei den Verweisen handelt es sich in der Informatik um Referenzen auf weitere Programmteile wie beispielsweise Container. Diese Art der Darstellung erlaubt nun auch Verweise auf andere Informationen wie Zustandsinformationen oder Statusinformationen. Aktuelle Informationen der Hardwarekomponenten können beispielsweise auch Online-Status, Alarme oder Warnmeldungen im Zusammenhang mit Temperatur, Stromversorgung, CPU-Auslastung, Arbeitsspeicher oder Speicherplatz einer Hardware-Komponente sein.

All diese Informationen können zeitabhängig abgefragt und beispielsweise aus Datenbanken ausgelesen werden. Werden beispielsweise nur die Informationen abgefragt, die den Zustand der einzelnen Komponenten charakterisieren, so kann aus dem Zuverlässigkeitsdiagramm eine Art Zustandsdiagramm oder ein Graph im Sinne dieser Erfindung erzeugt werden und die Verfügbarkeit V(t) kann zeitabhängig berechnet werden.

Die Vorgehensweise wird anhand von Fig. 6 deutlich. Im Soll-Zustand haben die beiden FUM210 (Instanz 55844/55845) sowie FUM280 (Instanz 55846) "Life Sign" = 1, was bedeutet, dass die Komponenten aktiv, also nicht ausgefallen sind. Im Graph aus Fig. 5 ist daher deutlich die Redundanz der Komponenten FUM210 (Instanz 55844/55845) abzulesen. Auf dieser Basis wird dann ein Wert der Verfügbarkeit V1 zu einem Zeitpunkt T1 ermittelt. Wenn jetzt zu einem Zeitpunkt T2 die FUM210 (Instanz 55844) ausfällt (in Fig. 6 durch die durchgestrichene Kante in Graph G1 dargestellt), dann wird aufgrund dieses Ereignisses festgestellt, dass die Komponente FUM210 (Instanz 55844) "Life Sign" = 0 hat und somit nicht mehr aktiv ist. In einem nächsten Schritt wird basierend auf der Projektierung von Fig. 1 und dem Zuverlässigkeitsblockdiagramm von Fig. 4 ein neuer Graph G2 berechnet, welcher den Redundanz-Verlust (den Ist-Zustand) wiedergibt und auf dieser Basis wird die neue Verfügbarkeit V(t) zum oder nach dem Zeitpunkt T2 berechnet.

Alternativ zu der zuvor beschriebenen ereignisbasierten Neuberechnung des Graphen mit anschließender Berechnung der momentanen Verfügbarkeit kann dies auch im Zyklus eines Automatisierungssystems (z.B. alle 10 ms) erfolgen. Bei dieser Variante kann ein Abgleich mit der Zustandsinformation der Komponenten kontinuierlich in Taktrate erfolgen.

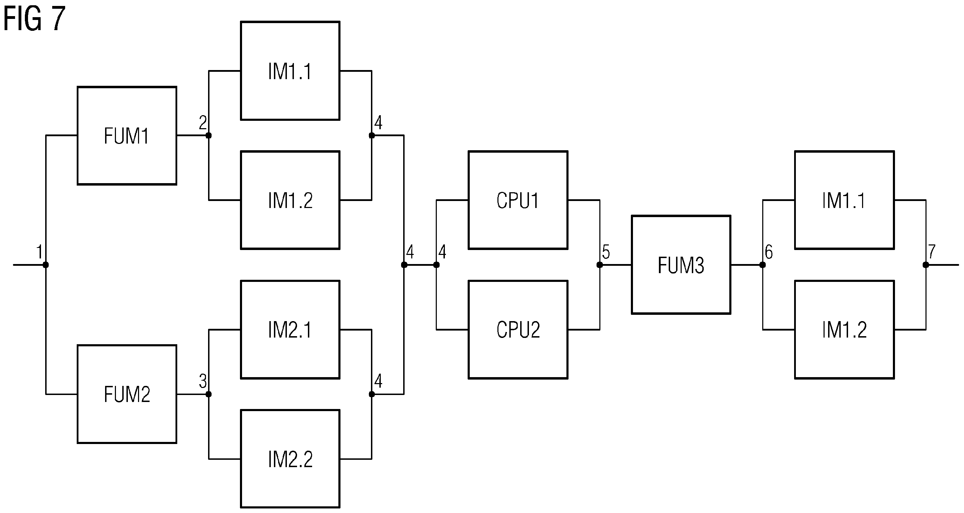

Als besonders vorteilhaft erweist sich die Anwendung des erfindungsgemäßen Verfahrens für komplexe Hardwarestrukturen. In Fig. 7 ist ein Ausführungsbeispiel für ein Zuverlässigkeitsblockdiagramm für eine im Vergleich zu Fig. 1 komplizierteren Projektierung gezeigt. Dieses Zuverlässigkeitsblockdiagramm wurde gemäß des automatisierten Verfahrens nach Anspruch 3 und 4 erstellt. Die schwarz eingefärbten Blöcke stellen die der Projektierung zugrunde liegenden Hardware-Komponenten dar. Es handelt sich hier um Funktionsmodule FUM, Interface-Module IM und Recheneinheiten CPUs.

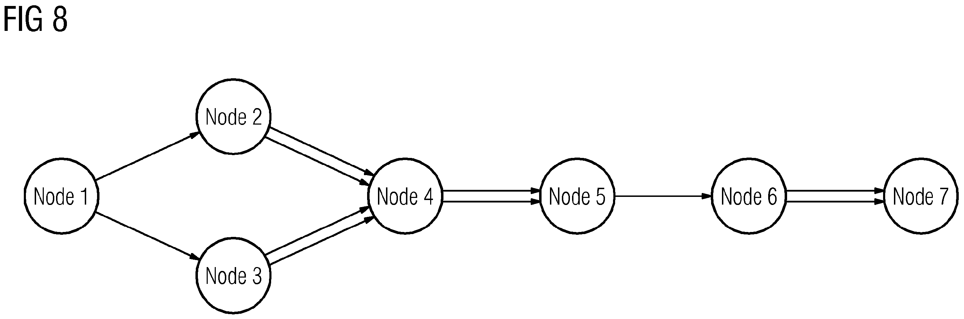

Gemäß der Erfindung wird nun aus dieser Darstellung ein Graph mit Knoten und Kanten erzeugt, der die Berechnung der momentanen Verfügbarkeit erlaubt. Die hier als Graph bezeichnete Darstellung entspricht einem Ereignisdiagramm und beantwortet die Frage, welche Komponenten für die Erfüllung der geforderten Funktion arbeiten müssen (womit diese Komponenten für die Funktion lebenswichtig sind) und welche Komponenten ausfallen dürfen (weil sie zum Beispiel redundant vorhanden sind). Der Graph erlaubt somit auch die Bestimmung von Redundanzen, auch verschachtelten Redundanzen. Der zu Fig. 7 gehörige Graph zur Berechnung der momentanen Verfügbarkeit ist in Fig. 8 dargestellt. Wie bereits erläutert sind die Knotenpunkte in Fig. 8 aus den Verbindungen zwischen den physikalischen Komponenten in Fig. 7 ersichtlich. Die Kanten entsprechen den jeweiligen Komponenten zwischen den Knoten (oder nummerierten Punkten in Fig. 7). Jede Kante einen Bezug auf die Ausfallrate der entsprechenden Komponente hat

Für den gegebenen Graphen wird zur Berechnung der momentanen Verfügbarkeit ein Anfangsknoten und ein Endknoten ermittelt (hier Knoten 1 und Knoten 7). Anschließend werden alle Wege zwischen dem Anfangs- und Endknoten bestimmt. Damit werden auch sämtliche Redundanzen (auch verschachtelte Redundanzen) bestimmt und deren Grad klassifiziert. Anhand der Kanten zwischen zwei Knoten wird die Ausfallwahrscheinlichkeit pro Komponente bestimmt und für jeden Weg wird anhand der Ausfallraten die Verfügbarkeit (V(t)) in Abhängigkeit von der Zeit berechnet. Graphen in der Art wie in Fig. 8 skizziert lassen sich demnach für genaue deterministische Aussagen verwenden.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Verfahren zum Betrieb einer automatisierten technischen Anlage, welche eine Vielzahl von Hardwarekomponenten (1-5) umfasst,
die gemäß einer Projektierung zu einem Funktionsplan verschaltet sind, um einen Prozess in der technischen Anlage zu steuern,
wobei das Verfahren darin besteht, dass aus dem Funktionsplan der technischen Anlage oder aus Teilen davon automatisiert ein Zuverlässigkeitsblockdiagramm (RBD) für die technische Anlage oder für Teile davon erstellt wird,
dass für jede Komponente eine Statusinformation abgefragt oder ausgelesen wird, und **dadurch gekennzeichnet ist,**
**dass** basierend auf dem Zuverlässigkeitsblockdiagramm und der Statusinformation jeder Komponente ein maschinenlesbarer Graph (G) erzeugt wird, mit welchem eine momentane Verfügbarkeit (V(t)) der technischen Anlage oder von Teilen davon berechnet und auf einer Anzeigeeinheit ausgegeben wird, wobei die momentanen Verfügbarkeit (V(t)) geeignet ist zu bestimmen, ob ein Eingriff in den Betrieb der technischen Anlage vorgenommen werden sollte
wobei der maschinenlesbare Graph das Zuverlässigkeitsblockdiagramm in maschinenlesbarer Form darstellt.

2. Verfahren nach Anspruch 1,
**dadurch gekennzeichnet,**
**dass** die momentane Verfügbarkeit (V(t)) eventgesteuert oder zyklisch ermittelt wird.

3. Verfahren nach Anspruch 1 oder 2,
**dadurch gekennzeichnet,**
**dass** das Zuverlässigkeitsblockdiagramm (RBD) derart erstellt wird,
**dass** ausgehend von einem Ausgangssignal einer Hardwarekomponente alle mit dem Ausgangssignal in Verbindung stehenden Eingangssignale basierend auf dem Funktionsplan ermittelt werden,
**dass** alle mit dem Ausgangssignal in Verbindung stehenden weiteren Hardwarekomponenten basierend auf dem Funktionsplan ermittelt werden,
**dass** die Ausgangssignale, Eingangssignale, Hardwarekomponenten und Verbindungen in einer Abhängigkeitsstruktur hinterlegt werden, welche mittels eines geeigneten Transformationsalgorithmus in ein Zuverlässigkeitsblockdiagramm umgewandelt wird.

4. Verfahren nach Anspruch 3,
**dadurch gekennzeichnet,**
**dass** es sich bei der Abhängigkeitsstruktur um eine Baumstruktur handelt.

5. Verfahren nach Anspruch 1, 2 oder 3,
**dadurch gekennzeichnet,**
**dass** die momentane Verfügbarkeit (V(t)) derart berechnet wird,
- **dass** für den gegebenen Graphen (G) ein Anfangsknoten und ein Endknoten ermittelt werden, wobei jede Kante einen Bezug auf die Ausfallrate der entsprechenden Komponente hat,
- **dass** alle Wege zwischen dem Anfangs- und Endknoten bestimmt werden, woraus Redundanzen bestimmt und deren Grad klassifiziert werden, und
- **dass** anhand der Kanten zwischen zwei Knoten eine Ausfallwahrscheinlichkeit bestimmt wird und für jeden Weg anhand der Ausfallraten die Verfügbarkeit (V(t)) in Abhängigkeit von der Zeit berechnet wird.

6. Verfahren nach einem der vorhergehenden Ansprüche, **dadurch gekennzeichnet,**
**dass** die momentane Verfügbarkeit in Echtzeit berechnet wird und kontinuierlich als Trend angezeigt wird.

7. Verfahren nach einem der vorhergehenden Ansprüche, **dadurch gekennzeichnet,**
**dass** Zuverlässigkeitsparameter der Hardwarekomponenten aus einer Datenbank ausgelesen werden und in das Zuverlässigkeitsblockdiagramm (RGB) oder den Graphen (G) integriert werden.

8. Verfahren nach einem der vorhergehenden Ansprüche, **dadurch gekennzeichnet,**
**dass** aktuelle Prozesswerte, Meldungen oder Gesundheitswerte einzelner Komponenten aus einer Datenbank oder einem Leitsystem der technischen Anlage bei der Berechnung der momentanen Verfügbarkeit berücksichtigt wird.

9. Verfahren nach einem der vorhergehenden Ansprüche, **dadurch gekennzeichnet,**
**dass** die Erstellung des Zuverlässigkeitsblockdiagramms und/oder die Berechnung der momentanen Verfügbarkeit einer Komponente oder von Teilen der Anlage oder der Gesamtanlage in einer Cloudumgebung erfolgt.

10. Verfahren nach einem der vorhergehenden Ansprüche, **dadurch gekennzeichnet,**
**dass** das Verfahren nach Ablauf einer vorherbestimmten Zeitdauer und/oder bei Auftreten eines sonstigen bestimmten Triggers, insbesondere eines Austauschs einer Hardwarekomponente, automatisch wiederholt durchgeführt wird, um das Zuverlässigkeitsblockdiagramm und/oder den Graphen zu aktualisieren.

11. Computerprogramm mit durch einen Computer ausführbaren Programmcodeanweisungen zur Implementierung des Verfahrens gemäß einem der Ansprüche 1 bis 10.

12. Speichermedium mit einem durch einen Computer ausführbaren Computerprogramm gemäß Anspruch 11.

13. Computersystem, das derart ausgelegt ist, dass ein ein Speichermedium nach Anspruch 12 implementiert ist.

## Claims

1. Method for operating an automated technical installation comprising a multiplicity of hardware components (1-5) which are interconnected according to a project planning process to form a function chart in order to control a process in the technical installation,
wherein the method involves
creating a reliability block diagram (RBD) for the technical installation or for parts of the latter from the function chart of the technical installation or parts of the latter, requesting or reading an item of status information for each component,
and is **characterized in that**
a machine-readable graph (G) is generated on the basis of the reliability block diagram and the status information for each component, with which graph an instantaneous availability (V(t)) of the technical installation or of parts of the latter is calculated and is output on a display unit, wherein the instantaneous availability (V(t)) is suitable for determining whether there should be intervention in the operation of the technical installation,
wherein the machine-readable graph represents the reliability block diagram in machine-readable form.

2. Method according to Claim 1,
**characterized**
**in that** the instantaneous availability (V(t)) is determined in an event-controlled or cyclical manner.

3. Method according to Claim 1 or 2,
**characterized**
**in that** the reliability block diagram (RBD) is created such that
starting from an output signal from a hardware component, all input signals connected to the output signal are determined on the basis of the function chart,
all further hardware components connected to the output signal are determined on the basis of the function chart,
the output signals, input signals, hardware components and connections are stored in a dependency structure which is converted into a reliability block diagram by means of a suitable transformation algorithm.

4. Method according to Claim 3,
**characterized**
**in that** the dependency structure is a tree structure.

5. Method according to Claim 1, 2 or 3,
**characterized**
**in that** the instantaneous availability (V(t)) is calculated such that
- a starting node and an end node are determined for the given graph (G), wherein each edge has a reference to the failure rate of the corresponding component,
- all paths between the starting node and the end node are determined, from which redundancies are determined and the degree thereof is classified, and
- a failure probability is determined on the basis of the edges between two nodes and the availability (V(t)) is calculated for each path on the basis of the failure rates as a function of the time.

6. Method according to one of the preceding claims, **characterized**
**in that** the instantaneous availability is calculated in real time and is displayed continuously as a trend.

7. Method according to one of the preceding claims, **characterized**
**in that** reliability parameters of the hardware components are read from a database and are integrated in the reliability block diagram (RGB) or the graph (G).

8. Method according to one of the preceding claims, **characterized**
**in that** current process values, messages or health values of individual components from a database or a control system of the technical installation are taken into account when calculating the instantaneous availability.

9. Method according to one of the preceding claims, **characterized**
**in that** the reliability block diagram is created and/or the instantaneous availability of a component or of parts of the installation or of the entire installation is calculated in a cloud environment.

10. Method according to one of the preceding claims, **characterized**
**in that** the method is automatically carried out repeatedly after the expiry of a predetermined period and/or upon the occurrence of another particular trigger, in particular replacement of a hardware component, in order to update the reliability block diagram and/or the graph.

11. Computer program having program code instructions which can be executed by a computer for implementing the method according to one of Claims 1 to 10.

12. Storage medium having a computer program according to Claim 11 which can be executed by a computer.

13. Computer system which is designed such that a storage medium according to Claim 12 is implemented.

## Revendications

1. Procédé pour faire fonctionner une installation technique automatisée, qui comprend une pluralité de composants (1 à 5) matériels, qui sont câblés suivant un établissement de projet en un plan fonctionnel pour commander un processus dans l'installation technique,
dans lequel le procédé consiste
à établir à partir du plan fonctionnel de l'installation technique ou de parties de celle-ci de manière automatisée un schéma (RBD) synoptique de fiabilité de l'installation technique ou de parties de celle-ci,
à demander ou à lire, pour chaque composant, une information de statut,
et est **caractérisé en ce que**
sur la base du schéma synoptique de fiabilité et de l'information de statut de chaque composant, on produit un graphe (G) déchiffrable par machine, par lequel on calcule une disponibilité (V(t)) instantanée de l'installation technique ou de parties de celle-ci et on la sort sur une unité d'affichage, dans lequel la disponibilité (V(t)) instantanée est propre à déterminer si une intervention dans le fonctionnement de l'installation technique devrait être effectuée, le graphe déchiffrable par machine représentant le schéma synoptique de fiabilité sous une forme déchiffrable par machine.

2. Procédé suivant la revendication 1,
**caractérisé en ce que** l'on détermine la disponibilité (V(t)) instantanée sous la commande d'un événement ou cycliquement.

3. Procédé suivant la revendication 1 ou 2,
**caractérisé en ce que** l'on établit le schéma (RBD) synoptique de fiabilité de manière à ce que à partir d'un signal de sortie d'un composant matériel, on détermine sur la base du plan fonctionnel tous les signaux d'entrée en liaison avec le signal de sortie,
**en ce que** l'on détermine, sur la base du plan fonctionnel, tous les autres composants matériels en liaison avec le signal de sortie,
**en ce que** l'on met les signaux de sortie, les signaux d'entrée, les composants matériels et les liaisons dans une structure de dépendance, que l'on transforme en un schéma synoptique de fiabilité au moyen d'un algorithme de transformation approprié.

4. Procédé suivant la revendication 3,
**caractérisé en ce que** la structure de dépendance est une structure d'arbre.

5. Procédé suivant la revendication 1, 2 ou 3, **caractérisé en ce que** l'on calcule la disponibilité (V(t)) instantanée,
- en déterminant, pour le graphe (G) donné un nœud initial et un nœud final, dans lequel chaque arc a un rapport au taux de défaillance du composant correspondant,
- en déterminant tous les chemins entre le nœud initial et le nœud final en en déterminant des redondances et en classant leur degré, et
- en déterminant à l'aide des arcs entre deux nœuds une probabilité de défaillance et en calculant pour chaque chemin, à l'aide des taux de défaillance la disponibilité (V(t)) en fonction du temps.

6. Procédé suivant l'une des revendications précédentes, **caractérisé en ce que** l'on calcule la disponibilité instantanée en temps réel et on l'affiche en continu sous la forme d'une tendance.

7. Procédé suivant l'une des revendications précédentes, **caractérisé en ce que** l'on lit des paramètres de fiabilité des composants matériels dans une base de données et on les intègre dans le schéma (RBD) synoptique de fiabilité ou dans le graphe (G).

8. Procédé suivant l'une des revendications précédentes, **caractérisé en ce que** l'on prend en compte, lors du calcul de la disponibilité instantanée des valeurs de processus en cours, des messages ou des valeurs de bon état de divers composants dans une base de données ou dans un système de gestion de l'installation technique.

9. Procédé suivant l'une des revendications précédentes, **caractérisé en ce que** l'établissement du schéma synoptique de fiabilité et/ou le calcul de la disponibilité instantanée d'un composant ou de parties de l'installation ou de toute l'installation s'effectue dans un environnement de nuage.

10. Procédé suivant l'une des revendications précédentes, **caractérisé en ce que** l'on effectue, de manière répétée automatiquement, le procédé après expiration d'une durée déterminée à l'avance et/ou à l'apparition d'un autre déclencheur déterminé, notamment d'un remplacement d'un composant matériel, pour mettre à jour le schéma synoptique de fiabilité et/ou le graphe.

11. Programme d'ordinateur comprenant des instructions de code de programme pouvant être exécutées par un ordinateur pour la mise en œuvre du procédé suivant l'une des revendications 1 à 10.

12. Support de mémoire comprenant un programme d'ordinateur pouvant être réalisé par ordinateur suivant la revendication 11.

13. Système d'ordinateur, qui est conçu de manière à mettre en œuvre un support de mémoire suivant la revendication 12.
